(19) Europäisches Patentamt
European Patent Office
Office européen des brevets

(11) Veröffentlichungsnummer: **0 078 943**
**A1**

# (12) EUROPÄISCHE PATENTANMELDUNG

(21) Anmeldenummer: 82109629.4

(22) Anmeldetag: 19.10.82

(51) Int. Cl.³: **C 08 G 63/62**

(30) Priorität: 31.10.81 DE 3143252

(43) Veröffentlichungstag der Anmeldung: 18.05.83 Patentblatt 83/20

(84) Benannte Vertragsstaaten: DE FR GB IT NL

(71) Anmelder: BAYER AG
Zentralbereich Patente, Marken und Lizenzen
D-5090 Leverkusen 1, Bayerwerk(DE)

(72) Erfinder: Neuray, Dieter, Dr.
Mobay Chemical Corporation
New Martinsville Virginia(US)

(72) Erfinder: Margotte, Dieter, Dr.
Wedelstrasse 48
D-4150 Krefeld(DE)

(72) Erfinder: Tresper, Erhard, Dr.
Mobay Chemical Corporation
Baytown Texas 77520(US)

(72) Erfinder: Jacobs, Günter, Dr.
Bodelschwinghstrasse 30
D-4150 Krefeld(DE)

## (54) Verfahren zur Herstellung von Polycarbonaten mit verbessertem Alterungsverhalten.

(57) Gegenstand der vorliegenden Erfindung ist ein Verfahren zur Herstellung von Polycarbonaten mit verbessertem Alterungs- und Hydrolyseverhalten, das dadurch gekennzeichnet ist, daß man das aus Diphenolen und/oder deren Chlorkohlensäureestern, Monophenolen, Phosgen und gegebenenfalls Verzweigern hergestelle Polycarbonat mit Arylchlorkohlensäureestern umsetzt.

EP 0 078 943 A1

BAYER AKTIENGESELLSCHAFT 5090 Leverkusen, Bayerwerk

Zentralbereich
Patente, Marken und Lizenzen PS-by-c

Verfahren zur Herstellung von Polycarbonaten mit verbessertem Alterungsverhalten

Gegenstand der vorliegenden Erfindung ist ein Verfahren zur Herstellung von Polycarbonaten mit mittleren Molekulargewichten (Gewichtsmittel) $\bar{M}w$ von mindestens 10 000, das dadurch gekennzeichnet ist, daß man das aus Diphenolen der Formel (I)

HO-Z-OH (I)

in der

Z ein zweiwertiger aromatischer Rest ist, der vorzugsweise 6-30 C-Atome enthält, und/oder deren Chlorkohlensäureestern unter Zusatz von 0,1 - 8 Mol-%, vorzugsweise 0,5-5 Mol-%, bezogen auf Mole Struktureinheiten Z, an Phenol oder substituierten Monophenolen, Phosgen und gegebenenfalls Verzweigern nach dem bekannten Zweiphasengrenzflächenverfahren hergestellte und in der organischen Phase gelöste Polycarbonat nach Abtrennung der wäßrig alkalischen Phase und vor der sauren Wäsche mit 0,1-1 Mol-%,

vorzugsweise 0,15 - 0,5 Mol-%, bezogen jeweils auf Mole an Struktureinheiten Z, Arylchlorkohlensäureester der Formel (II)

$$Ar-O-\overset{\overset{O}{\|}}{C}-Cl \qquad (II)$$

in der

Ar einen einwertigen aromatischen Rest, vorzugsweise einen Phenyl- oder Alkylphenylrest mit 1-18 C-Atomen im Alkylrest bedeutet, umsetzt.

Gegenstand der vorliegenden Erfindung sind außerdem die nach dem erfindungsgemäßen Verfahren erhältlichen Polycarbonate.

Die nach dem erfindungsgemäßen Verfahren hergestellten Polycarbonate haben Gewichtsmittelmolekulargewichte ($\bar{M}_w$) von mindestens 10.000, insbesondere von 10.000 bis 200.000 und besonders bevorzugt von 20.000 bis 80.000 (ermittelt durch Gelchromatographie nach vorheriger Eichung) und entsprechen der Strukturformel (III)

$$E_1-\overset{\overset{O}{\|}}{C}-\left[O-Z-O-\overset{\overset{O}{\|}}{C}\right]_n-E_2 \qquad (III)$$

in der

$E_1$ und $E_2$ gleich oder verschieden sind und einem gegebenenfalls substituierten Aryloxyrest entsprechen,

Z für einen zweiwertigen aromatischen Rest aus Formel (I) steht und

n der Polykondensationsgrad ist, der aus dem mittleren Molekulargewicht $\bar{M}_w$ der Polycarbonate von mindestens 10.000 bzw. von 10.000 bis 200.000, bzw. von 20.000 bis 80.000 resultiert.

Die nach dem erfindungsgemäßen Verfahren erhältlichen Polycarbonate haben im Vergleich zu entsprechenden ohne Nachreaktion mit Arylchlorkohlensäureestern der Formel (II) hergestellten Polycarbonaten einen deutlich geringeren Gehalt an freien phenolischen OH-Gruppen und damit eine deutlich verbesserte Alterungsbeständigkeit und ein verbessertes Hydrolyseverhalten.

Die Herstellung aromatischer Polycarbonate nach dem Phasengrenzflächenverfahren unter Einsatz von Säurechloriden als Kettenabbrecher ist bekannt (siehe beispielsweise DE-OS 26 20 256 (Le A 16 686), DE-OS 27 16 304 (Le A 18 024), DE-OS 27 46 139 (Le A 18 392) und japanische Offenlegungsschrift 34 992/76).

Die nach derartigen Verfahren erhältlichen Polycarbonate weisen je nach Molekulargewicht einen Gehalt an phenolischen OH-Endgruppen von etwa 100 bis 500 ppm (etwa 0,01 bis 0,05 Gew.-%) auf.

Phenolische OH-Gruppen beeinflussen jedoch bekanntlich nachteilig die thermische und hydrolytische Stabilität der thermoplastischen aromatischen Polycarbonate, was den Zusatz von geeigneten Stabilisatoren erforderlich macht. Die erfindungsgemäß erhältlichen thermoplastischen Polycarbonate kommen dagegen ohne bzw. mit wesentlich weniger Thermo- oder Hydrolysestabilisatoren aus.

In der US-Patentschrift 3 475 373 wird ein Verfahren zur Herstellung von OH-Gruppen-freien Polycarbonaten beschrieben, das darin besteht, daß man in einer 1. Stufe ohne Verwendung von monofunktionellen Kettenabbrechern durch Umsetzung von Bisphenolen mit Phosgen und/oder Bischlorkohlensäureestern Polycarbonate herstellt, die phenolische OH- und Chlorkohlensäureester-Endgruppen aufweisen. In einer 2. Reaktionsstufe werden zunächst die vorhandenen phenolischen Endgruppen mit Säurechloriden oder Chlorkohlensäureestern umgesetzt, wobei eine Reaktionszeit von 15-30 Minuten gewählt wird, um die Reaktion zu vervollständigen. Anschließend werden in einer 3. Stufe überschüssiges Säurechlorid bzw. Chlorkohlensäureester sowie Chlorkohlensäureesterendgruppen des Polycarbonats durch Umsetzung mit Monohydroxyverbindungen zur Reaktion gebracht.

Dieses Verfahren hat jedoch eine Reihe von Nachteilen:

1. Die nach der ersten Stufe anfallenden OH- und O-COCl-Endgruppen aufweisenden Polycarbonate sind,

da sie ohne Kettenbegrenzer hergestellt wurden, sehr uneinheitlich und weisen damit wesentlich schlechtere Eigenschaften, z.B. ein deutlich schlechteres Fließverhalten auf.

2. Die Reaktionszeit zur Umsetzung des phenolischen OH-Gehaltes ist mit 15-30 Minuten sehr lange und damit unwirtschaftlich.

3. Überschüssiges Säurechlorid bzw. überschüssiger Chlorkohlensäureester muß mit Alkoholen oder Phenolen abgefangen werden.

Demgegenüber lag es nicht nahe, daß die erfindungsgemäße Reaktion mit dem Arylchlorkohlensäureester sehr viel schneller erfolgt und die 3. Stufe entfällt. Es lag ebenfalls nicht nahe, daß zwar Chlorkohlensäureester, nicht jedoch Säurechloride wie Benzoylchlorid die erfindungsgemäße Wirkung haben (siehe Vergleichsbeispiel).

Die Bereitstellung aromatischer Polycarbonate mit gegenüber dem Stand der Technik deutlich verringertem phenolischen OH-Gehalt wird somit durch das erfindungsgemäße Verfahren ohne Eigenschaftseinbußen wirtschaftlich gelöst.

Das erfindungsgemäße Verfahren besteht darin, daß ein nach dem Zweiphasengrenzflächenverfahren aus Diphenolen

der Formel (I) unter Zusatz von Kettenreglern auf übliche Weise hergestelltes Polycarbonat nach der Kondensation und vor der Aufarbeitung in einer Nachreaktion mit 0,1 - 1 Mol-%, vorzugsweise 0,15 - 0,5 Mol-% eines Arylchlorkohlensäureesters der Formel (II), bezogen auf Mole Struktureinheiten Z, umgesetzt wird.

Die Menge an Chlorkohlensäureester richtet sich in erster Linie nach dem Gehalt an freien phenolischen OH-Endgruppen im Polycarbonat nach der Polykondensation. Es hat sich als ausreichend erwiesen, wenn pro Mol phenolische OH-Endgruppe 1-2 Mole Chlorkohlensäureester zugesetzt werden. Wenn man weniger als die theoretisch notwendige Menge zugibt, wird zwar der Gehalt an phenolischem OH ebenfalls gesenkt, aber nicht so weitgehend, wie mit der theoretischen Menge oder mit überschüssigem Chlorkohlensäureester. Bei Zugabe von mehr als der doppelt molaren Menge Chlorkohlensäureester wird der phenolische OH-Gehalt nur noch geringfügig reduziert.

Der Arylchlorkohlensäureester wird gelöst in einem für Polycarbonat üblichen Lösungsmittel oder Lösungsmittelgemisch, z.B. Methylenchlorid, Toluol oder Chlorbenzol, der organischen Lösung des Polycarbonats nach Abtrennung der wäßrig alkalischen Phase zugegeben. Die organische Polycarbonat-enthaltende Lösung enthält noch geringe Anteile wäßrig alkalische Phase (ca. 1 %) und Katalysator z.B. ein tertiäres Amin. Die Nachreaktion des Polycarbonats mit dem Arylchlorkohlensäureester erfolgt in einer Verweilzeit von 5-60 sec. Längere

Reaktionszeiten führen nicht mehr zu einer weiteren Absenkung des phenolischen OH-Gehaltes. Nach dieser Nachreaktion wird wie üblich gewaschen und aufgearbeitet.

Die auf diese Weise erhältlichen Polycarbonate haben gegenüber entsprechenden ohne Nachreaktion mit Arylchlorkohlensäureestern hergestellten Polycarbonaten einen deutlich geringeren Gehalt an phenolischen OH-Endgruppen und eine deutlich verbesserte Thermo- und Hydrolysestabilität.

Nach dem erfindungsgemäßen Verfahren werden nahezu OH-Gruppen-freie, molekulargewichtseinheitliche Polycarbonate ($\bar{M}_w : \bar{M}_n = 1,8 - 2,5$) in gegenüber dem üblichen Verfahren nur um max. 1 Minute längerer Reaktionszeit erhalten. Eine weitere Stufe zur Umsetzung überschüssiger Chlorkohlensäureester mit Alkoholen oder Phenolen ist nicht erforderlich. Die erfindungsgemäßen Polycarbonate sind frei von verseifbarem Chlor.

Als Diphenole der Formel (I), die vorzugsweise 6 bis 30 C-Atome enthalten, sind sowohl ein- oder auch mehrkernige Diphenole zu verstehen, die Heteroatome enthalten können und substituiert sein können. Folgende Diphenole sind beispielsweise geeignet:
Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether

Bis-(hydroxyphenyl)-ketone
Bis-(hydroxyphenyl)-sulfoxide
Bis-(hydroxyphenyl)-sulfone
α,α'-Bis-(hydroxyphenyl)-diisopropylbenzole
sowie deren kernalkylierte und kernhalogenierte Verbindungen. Diese und weitere geeignete Diphenole sind z.B. in den US-Patentschriften 3 028 365, 2 999 835, 3 148 172, 2 991 273, 3 271 367 und 2 999 846, in den deutschen Offenlegungsschriften 1 570 703, 2 063 050, 2 036 052, 2 211 956, der französischen Patentschrift 1 561 518 und in der Monographie "H. Schnell, Chemistry and Physics of Polycarbonates, Interscience Publishers, New York, 1964" beschrieben.

Bevorzugte Diphenole sind z.B.:
4,4'-Dihydroxydiphenyl
2,2-Bis-(4-hydroxyphenyl)-propan
2,4-Bis-(4-hydroxyphenyl)-2-methylbuten
1,1-Bis-(4-hydroxyphenyl)-cyclohexan
α,α'-Bis-(4-hydroxyphenyl)-p-diisopropylbenzol
2,2-Bis-(3-methyl-4-hydroxyphenyl)-propan
2,2-Bis-(3-chlor-4-hydroxyphenyl)-propan
Bis-(3,5-dimethyl-4-hydroxyphenyl)-methan
2,2-Bis-(3,5-dimethyl-4-hydroxyphenyl)-propan
Bis-(4-hydroxyphenyl)-sulfon
Bis-(3,5-dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyclohexan
α,α'-Bis-(3,5-dimethyl-4-hydroxyphenyl)-p-diisopropylbenzol

2,2-Bis-(3,5-dichlor-4-hydroxyphenyl)-propan
2,2-Bis-(3,5-dibrom-4-hydroxyphenyl)-propan.

Besonders bevorzugte Diphenole sind z.B.:
2,2-Bis-(4-hydroxyphenyl)-propan
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis-(4-hydroxyphenyl)-cyclohexan
Bis-(4-hydroxyphenyl)-sulfon.

Es können auch beliebige Mischungen der vorgenannten Diphenole verwendet werden.

Zwecks Verbesserung des Fließverhaltens können auch geringe Mengen, vorzugsweise Mengen zwischen 0,05 und 2,0 Mol-%, bezogen auf Struktureinheiten Z, an drei- oder mehr als dreifunktionellen Verbindungen, insbesondere solchen mit drei oder mehr als drei phenolischen Hydroxylgruppen mitverwendet werden. Einige der verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenylisopropyl)-phenyl)-ortho-terephthal-säureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol. Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden 0,05 bis 2 Mol-%, bezogen auf Struktureinheiten Z, an Verzweigern können entweder mit den Diphenolen in der wäßrig alkalischen Phase vorgelegt werden oder mit den Kettenabbrechern in dem organischen Lösungsmittel gelöst vor der Phosgenierung zugegeben werden.

Anstelle der Diphenole der Formel (I) können auch deren Mono- und/oder Bis-chlorkohlensäureester mitverwendet werden, wobei diese in organischen Lösungsmitteln gelöst zugegeben werden.

Als monophenolische Molekulargewichtsregler, die in den eingangs erwähnten Mengen eingesetzt werden, eignen sich Phenol und/oder substituierte Monophenole wie 2,6-Dimethylphenol, p-tert.-Butylphenol oder 4-(1,1,3,3-Tetramethyl-butyl)-phenol.

Die Verbindungen (II), die zur Herabsetzung des phenolischen OH-Gehaltes von Polycarbonaten verwendet werden

können, sind die Chlorkohlensäureester der üblicherweise als Kettenabbrecher verwendeten Monophenole, z.B. die Chlorkohlensäureester von Phenol, p-tert.-Butylphenol, 2,6-Dimethylphenol oder 4-(1,1,3,3-Tetramethyl-butyl)-phenol. Die Monophenole, die als Kettenabbrecher bei Beginn der Reaktion eingesetzt werden und die den zur Nachreaktion verwendeten Chlorkohlensäureestern zugrundeliegenden Monophenole können gleich oder verschieden sein.

Die Menge an Kettenabbrecher sowie an Verzweiger richtet sich wie bereits erwähnt nach Molen Struktureinheiten Z, die aus den Diphenolen der Formel (I) und deren Chlorkohlensäureestern resultieren, bei Einsatz von Chlorkohlensäureestern der Diphenole (I) kann jedoch die Phosgenmenge in bekannter Weise entsprechend reduziert werden; ansonsten beträgt sie üblicherweise etwa 1,1 bis 1,5 Mol, pro Mol an eingesetztem Diphenol.

Als organische Phase für die Phasengrenzflächenpolykondensation dient beispielsweise Methylenchlorid, Chlorbenzol sowie Mischungen aus Methylenchlorid und Chlorbenzol.

Die Herstellung der erfindungsgemäßen Polycarbonate nach dem Phasengrenzflächenverfahren kann in üblicher Weise durch Katalysatoren wie tertiäre Amine, insbesondere tertiäre aliphatische Amine wie beispielsweise

Tributylamin, Triethylamin oder N-Ethylpiperidin katalysiert werden; die Katalysatoren können in Mengen von 0,05 - 20 Mol-%, bezogen auf Mole Struktureinheiten Z eingesetzt werden. Die Katalysatoren können vor Beginn der Phosgenierung oder während oder auch nach der Phosgenierung zugesetzt werden.

Die Isolierung der erfindungsgemäß erhältlichen Polycarbonate erfolgt in bekannter Weise, indem nach der erfindungsgemäßen Nachreaktion die organische Phase zunächst alkalisch z.B. mit verdünnter Natronlauge gewaschen wird, dann sauer, z.B. mit verdünnter Phosphorsäure, anschließend neutral gewaschen, abgetrennt und nach Trocknung entweder durch Verdampfen der organischen Lösungsmittels oder durch Zusatz eines Fällungsmittels aufgearbeitet wird. Das erfindungsgemäß erhältliche Polycarbonat kann in üblicher Weise zu beliebigen Formkörpern, beispielsweise zu Folien, verformt werden.

Zur Modifizierung der erfindungsgemäß erhältlichen Polycarbonate können Substanzen wie z.B. Ruß, Kieselgur, Kaolin, Tone, $CaF_2$, $CaCO_3$, Aluminiumoxide, Glasfasern und anorganische Pigmente sowohl als Füllstoffe als auch als Nucleierungsmittel zugesetzt werden. Ebenso können sie die für Polycarbonat üblichen Entformungsmittel, wie z.B. Glycerintristearat, enthalten. In den nachfolgenden Beispielen ist $\eta$rel gemessen in $CH_2Cl_2$ bei 25°C und einer Konzentration von 0,5 Gew.-%.

Die Bestimmung der phenolischen OH-Endgruppen im Poly-

carbonat erfolgt nach der $TiCl_4$-Methode, wie von A. Horbach, U. Veiel und H. Wunderlich in "Die makromolekulare Chemie, Bd. 88, S. 215 ff (1965) beschrieben. An gleicher Stelle wird auch die Methode zur Bestimmung des verseifbaren Chlor in Polycarbonat beschrieben.

Beispiel 1 (Vergleich)

Polycarbonat, hergestellt unter Verwendung von Phenol als Kettenabbrecher.

Aus 3,42 kg (15 Mol) 2,2-Bis-(4-hydroxyphenyl)-propan (Bisphenol A), 46,6 g Phenol (3,3 Mol %), 2,75 kg 45 %iger wäßriger Natronlauge und 16 l destilliertem Wasser wird eine Lösung hergestellt. Nach Zugabe von 36,5 kg Methylenchlorid werden unter intensivem Rühren bei 20-25°C in 1 h 2,83 kg Phosgen eingeleitet. Durch Zugabe weiterer 6,5 %iger Natronlauge (24 kg) im Verlaufe der Phosgenierung wird der pH-Wert bei 13-14 gehalten. Dann werden 15,2 g (1 Mol-%) Triethylamin zugefügt und 30 Minuten bei pH 13-14 nachgerührt. Die Bisphenolat-freie wäßrige Phase wird abgetrennt, die organische Phase mit 2 %iger Phosphorsäure angesäuert und mit Wasser elektrolytfrei gewaschen. Das Lösungsmittel wird weitgehend abdestilliert, das Polycarbonat über einen Ausdampfextruder extrudiert und granuliert. Das Polycarbonat hat eine relative Lösungsviskosität ($\eta_{rel}$) von 1,290 und einen phenolischen OH-Gehalt von 250 ppm.

Beispiel 2

Polycarbonat, hergestellt unter Verwendung von Phenol als Kettenabbrecher und Nachreaktion mit Phenylchlorkohlensäureester.

Wie in Beispiel 1 beschrieben, wird ein Polycarbonat aus Bisphenol A und 3,3 Mol % Phenol hergestellt. Nach Abtrennung der wäßrig alkalischen Phase wird die noch ca. 1 Gew.-% wäßrig alkalische Phase enthaltende organische Phase in 6 gleiche Portionen, die jeweils 635 g Polycarbonat enthalten, aufgeteilt und unterschiedlich weiterverarbeitet.

a) Aufarbeitung wie in Beispiel 1 (ohne Nachreaktion mit Phenylchlorkohlensäureester)

b-g) Es werden wechselnde Mengen Phenylchlorkohlensäureester als 20 %ige Lösung in Methylenchlorid zugesetzt und 10-60 sec. intensiv durchmischt. Dann wird mit 2 %iger Phosphorsäure angesäuert und, wie in Beispiel 1 beschrieben, weiter aufgearbeitet.

Die relative Lösungsviskosität der Polycarbonate aus Beispiel 2 beträgt 1,285. Die phenolischen OH-Gehalte sind in Tabelle 1 zusammengestellt.

Tabelle 1

Phenolischer OH-Gehalt der Polycarbonate aus Beispiel 2 in Abhängigkeit von Phenylchlorkohlensäureester-Menge und Reaktionszeit

| Beispiel | Phenylchlorkohlensäureester (g) | (Mol-% bezogen auf 230 ppm OH) | Nachreaktionszeit (sec.) | Phenolisches OH (ppm) | verseifbares Chlor (ppm) |
|---|---|---|---|---|---|
| 2a | - | - | - | 230 | <2 |
| 2b | 1,04 | 75 | 30 | 110 | <2 |
| 2c | 1,38 | 100 | 30 | 70 | <2 |
| 2d | 2,07 | 150 | 30 | 30 | <2 |
| 2e | 2,76 | 200 | 30 | 20 | <2 |
| 2f | 2,07 | 150 | 10 | 35 | <2 |
| 2g | 2,07 | 150 | 60 | 30 | <2 |

Vergleichsbeispiel 2h

Entsprechend 2d wird der Versuch mit Benzoylchlorid anstelle von Phenylchlorkohlensäureester durchgeführt:

Eine Lösung von 635 g Polycarbonat mit einem phenolischen OH-Gehalt von 230 ppm wird, wie in Beispiel 2 beschrieben, mit 1,86 g (150 Mol-% bezogen auf phenolisches OH) Benzoylchlorid (als 20 %ige Lösung in Methylenchlorid) versetzt und 30 sec. intensiv durchmischt.

Das nach der Aufarbeitung erhaltene Polycarbonat ( $\eta_{rel}$ = 1,285) hat einen phenolischen OH-Gehalt von 230 ppm., verseifbarer Chlor = $<$ 2 ppm.

Das bedeutet, es ist keine Verringerung der phenolischen OH-Gehaltes durch Nachreaktion mit Benzoylchlorid eingetreten.

Beispiel 3

Polycarbonat, hergestellt unter Verwendung von Phenol als Kettenabbrecher und Nachreaktion mit Phenylchlorkohlensäureester.

Wie in Beispiel 1 beschrieben, wird ein Polycarbonat aus Bisphenol A und 3,3 Mol-% Phenol hergestellt. Nach Abtrennung der wäßrig alkalischen Phase wird eine Lösung von 2,0 g Phenylchlorkohlensäureester in 10 ml Methylenchlorid unter intensivem Rühren eingerührt. Nach 60 sec. Reaktionszeit wird mit 2 %iger Phosphorsäure angesäuert und wie in Beispiel 1 aufgearbeitet. Das resultierende Polycarbonat hat eine relative Lösungsviskosität $\eta$ rel = 1,288 und einen phenolischen OH-Gehalt von 25 ppm.

Die Polycarbonate aus Beispiel 1 und Beispiel 3 werden zu Prüfkörpern verarbeitet und

a) die Lichttransmission nach DIN 5033 und DIN 4646 mit Hilfe eines Spektralphotometers bei 420 nm und einer Schichtdicke von 4 mm nach Temperung bei 140°C

b) die Hydrolysebeständigkeit mittels Heißwasserlagerung von Normkleinstäben bei 100°C gemessen.

Die Werte sind in den Tabellen 2 und 3 wiedergegeben.

Tabelle 2

Lichttransmission von 4 mm dicken Polycarbonat-Plättchen bei 420 nm nach Temperung bei 140°C

| Polycarbonat nach Beispiel | Temperung bei 140°C | | | | |
|---|---|---|---|---|---|
| | 0 | 6 | 12 | 24 | 48 |
| 1 (Vergleich) | 84,0 | 83,5 | 82,7 | 81,4 | 78,2 |
| 3 | 86,5 | 86,3 | 85,8 | 85,0 | 83,2 |

Tabelle 3

Heißwasserlagerung von Normkleinstäben bei 100°C

Schlagzähigkeit und relative Viskosität in Abhängigkeit von der Kochzeit

| Kochzeit in (h) | | Beispiel 1 | Beispiel 3 |
|---|---|---|---|
| Ausgang | $\eta$ rel | 1,290 | 1,288 |
| | $a_n$ (kJ/$m^2$) | nicht gebrochen | nicht gebrochen |
| 200 | $\eta$ rel | 1,282 | 1,285 |
| | $a_n$ | nicht gebrochen | nicht gebrochen |
| 400 | $\eta$ rel | 1,262 | 1,278 |
| | $a_n$ | 7 x nicht gebrochen<br>3 x 99 | nicht gebrochen |
| 700 | $\eta$ rel | 1,252 | 1,270 |
| | $a_n$ | 5 x nicht gebrochen<br>5 x 76 | nicht gebrochen |
| 1000 | $\eta$ rel | 1,240 | 1,265 |
| | $a_n$ | 4 x nicht gebrochen<br>6 x 54 | 9 x nicht gebrochen<br>1 x 90 |

Patentansprüche

1. Verfahren zur Herstellung von Polycarbonaten mit mittleren Molekulargewichten (Gewichtsmittel) $\bar{M}w$ von mindestens 10 000, dadurch gekennzeichnet, daß man das aus Diphenolen der Formel (I)

HO-Z-OH (I)

in der Z ein zweiwertiger aromatischer Rest ist, und/oder deren Chlorkohlensäureester unter Zusatz von 0,1-8 Mol-%, bezogen auf Mole Struktureinheiten Z, an Phenol oder substituierten Monophenolen, Phosgen und gegebenenfalls Verzweigern nach dem bekannten Zweiphasengrenzflächenverfahren hergestellte und in der organischen Phase gelöste Polycarbonat nach Abtrennung der wäßrig alkalischen Phase und vor der sauren Wäsche mit 0,1 bis 1 Mol-%, bezogen jeweils auf Mole an Struktureinheiten Z, Arylchlorkohlensäureester der Formel (II)

$$Ar-O-\overset{\overset{O}{\|}}{C}-Cl \qquad (II),$$

in der

Ar einen einwertigen aromatischen Rest bedeutet,

umsetzt.

2. Verfahren gemäß Anspruch 1, dadurch gekennzeichnet, daß man mit 0,15 bis 0,5 Mol-% Arylchlorkohlensäureester der Formel (II) umsetzt.

3. Polycarbonate erhältlich nach dem Verfahren der Ansprüche 1 und 2.

Europäisches Patentamt

# EUROPÄISCHER RECHERCHENBERICHT

0078943

Nummer der Anmeldung

EP 82 10 9629

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| A | --- DE-A-2 555 366 (MITSUBISHI GAS) * Beispiele 1-7 * | 1 | C 08 G 63/62 |
| D,A | --- DE-A-2 716 304 (BAYER AG) * Ansprüche 1-3 * | 1,3 | |
| A | --- DE-A-2 626 776 (MITSUBISHI GAS) * Anspruch 1; Beispiele 7, 10 * | 1-3 | |
| D,A | --- DE-A-2 746 139 (BAYER AG) * Ansprüche * ----- | 1-3 | |
| | | | RECHERCHIERTE SACHGEBIETE (Int. Cl. 3) |
| | | | C 08 G 63/62<br>C 08 G 63/76 |

Der vorliegende Recherchenbericht wurde für alle Patentansprüche erstellt.

| Recherchenort | Abschlußdatum der Recherche | Prüfer |
|---|---|---|
| BERLIN | 20-01-1983 | WIBMER P.K. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82